# NEUE EUROPÄISCHE PATENTSCHRIFT

(11) **EP 3 516 440 B2**
(45) Veröffentlichungstag und Bekanntmachung des Hinweises auf die Entscheidung über den Einspruch: **23.08.2023**
(45) Hinweis auf die Patenterteilung: 25.11.2020
(21) Anmeldenummer: 17781403.5
(22) Anmeldetag: 19.09.2017
(51) Int. Cl.: G02B 21/00, G02B 21/08, G02B 21/36

(54) **MIKROSKOPSYSTEM**
MICROSCOPE SYSTEM
SYSTÈME DE MICROSCOPE

(30) Priorität: 19.09.2016 DE 102016011227
(43) Veröffentlichungstag der Anmeldung: 31.07.2019
(73) Patentinhaber: Leica Microsystems CMS GmbH, 35578 Wetzlar (DE)
(72) Erfinder: SCHUMANN, Christian, 35423 Lich (DE)
(74) Vertreter: Schaumburg und Partner Patentanwälte mbB
(86) Internationale Anmeldenummer: PCT/EP2017/073580
(87) Internationale Veröffentlichungsnummer: WO 2018/050907

(56) Entgegenhaltungen:
- WO-A1-2010/012980
- WO-A2-2015/109323
- DE-A1-102010 060 121
- DE-A1-102011 000 835
- DE-A1-102011 054 914
- DE-A1-102012 211 943

## Beschreibung

Die Erfindung betrifft ein Mikroskopsystem mit einer lichtblattmikroskopischen Funktionseinheit, die ausgebildet ist, eine Probe in einem ersten Betriebszustand des Mikroskopsystems mittels einer lichtblattartigen Beleuchtungslichtverteilung abzubilden, und eine rastermikroskopische Funktionseinheit, die ausgebildet ist, die Probe in einem zweiten Betriebszustand des Mikroskopsystems mittels einer punktartigen Beleuchtungslichtverteilung abzubilden.

Aus dem Stand der Technik sind sogenannte Lichtscheiben- oder Lichtblattmikroskope bekannt, die eine lichtblattartige Beleuchtungslichtverteilung generieren, um in der Probe nur eine dünne Schicht zu beleuchten. Neben Lichtblattmikroskopen, die probenseitig zwei separate Objektive für die Beleuchtung und die Detektion aufweisen, werden mittlerweile auch Lichtblattmikroskope eingesetzt, die mit einem einzigen der Probe zugewandten Objektiv auskommen. Beispielsweise wird in der US 8 582 203 B2 ein Mikroskop vorgeschlagen, bei dem unter Einsatz einer dem Objektiv vorgeordneten Zylinderlinse das Beleuchtungslicht derart in die Probe fokussiert wird, dass sich ein zur optischen Achse des Objektivs schräggestelltes Lichtblatt ergibt Wegen dieser Schrägstellung wird ein solches Mikroskop auch als Schiefebenenmikroskop (OPM: "oblique plane microscope") bezeichnet.

Aus der US 8 619 237 B2 ist eine Variation eines Schiefebenenmikroskops bekannt, die eine laterale, d.h. quer zur Lichtausbreitungsrichtung gerichtete Abtastung des Probenvolumens mithilfe von zwei Ablenkelementen ermöglicht. Ein solches Mikroskop wird auch als SCAPE-Mikroskop bezeichnet (SCAPE:"swept confocally-aligned planar excitation").

Während ein Lichtblattmikroskop die Probe also mittels einer lichtblattartigen Beleuchtungslichtverteilung abbildet, erfolgt die Probenabbildung bei herkömmlichen Rastermikroskopen, z.B. Konfokal- oder Multiphotonenmikroskopen, punktweise. Ein solches Rastermikroskop erzeugt demnach eine punktartige Beleuchtungslichtverteilung, die mithilfe von Abtastelementen über die Probe bewegt wird, um diese längs zweier orthogonaler Abtastachsen mit der Beleuchtungslichtverteilung abzutasten. Ein Überblick über die Vielzahl an Rastermikroskopsystemen findet sich z.B. in J. Pawley, Handbook of Biological Confocal Microscopy, ISBN 978-0-387-45524-2.

Zum Stand der Technik wird ferner auf die US 7 573 635 B2 verwiesen, die ein Mikroskop mit einer Galvanometerspiegelanordnung zur Umschaltung zwischen einer konoskopischen und einer orthoskopischen Abbildung offenbart.

Sowohl Schiefebenenmikroskope als auch Rastermikroskope, die jeweils mit einem oder mehreren Abtastelementen versehen sind, um die Probe mit der jeweiligen Beleuchtungslichtverteilung abzutasten, benötigen ein Fernrohrsystem, das die Austrittspupille des probenseitigen Objektivs in Form eines reellen Bildes auf das jeweilige Abtastelement abbildet. Ein solches Fernrohrsystem muss sowohl für orthoskopische als auch für konoskopische Abbildungen äußerst abberationsarm sein, um eine adäquate Abbildungsgüte zu gewährleisten. Dadurch ist es vergleichsweise teuer.

Weiterhin benötigen diese Fernrohrsysteme einen Zugang zur Objektivpupille. Herkömmliche Mikroskope verfügen hierzu über entsprechende Schnittstellen in Form von Anschlüssen, beispielsweise Flansche. Das Vorhalten solcher Schnittstellen ist mechanisch und optisch aufwendig und vergrößert den Platzbedarf des Mikroskops.

Aus der WO 2015/109323 A2 ist ein Schiefebenenmikroskopsystem mit zusätzlicher abrasternder Beleuchtung bekannt.

Da die beiden vorstehend beschriebenen Mikroskopieanwendungen, nämlich die Schiefebenenmikroskopie und die punktweise arbeitende Rastermikroskopie, applikativ komplementäre Bildgebungsansätze darstellen, die sich in der Probenanalyse gewinnbringend ergänzen können ist es wünschenswert, ein Mikroskopsystem bereitzustellen, mit dem sich die beiden Bildgebungsmethoden miteinander kombinieren lassen.

Aufgabe der Erfindung ist es, ein Mikroskopsystem und ein Verfahren zur lichtmikroskopischen Abbildung einer Probe anzugeben, das mit vergleichsweise geringem technischem Aufwand sowohl eine lichtblattmikroskopische als auch eine rastermikroskopische Anwendung erlaubt.

Die Erfindung löst diese Aufgabe durch die Gegenstände der unabhängigen Ansprüche. Vorteilhafte Weiterbildungen sind in den Unteransprüchen angegeben.

Das erfindungsgemäße Mikroskopsystem umfasst eine lichtblattmikroskopische Funktionseinheit, die ausgebildet ist, eine Probe in einem ersten Betriebszustand des Mikroskopsystems mittels einer lichtblattartigen Beleuchtungslichtverteilung abzubilden, eine rastermikroskopische Funktionseinheit, die ausgebildet ist, die Probe in einem zweiten Betriebszustand des Mikroskopsystems mittels einer punktartigen Beleuchtungslichtverteilung auszubilden, ein erstes Abtastelement, das ausgebildet ist, die Probe in dem ersten Betriebszustand mit der durch die lichtblattmikroskopische Funktionseinheit erzeugten lichtblattartigen Beleuchtungslichtverteilung einachsig abzutasten und die Probe in dem zweiten Betriebszustand mit der durch die rastermikroskopische Funktionseinheit erzeugten punktartigen Beleuchtungslichtverteilung einachsig abzutasten, ein zweites Abtastelement, das ausgebildet ist, die Probe in dem zweiten Betriebszustand mit der durch die rastermikroskopische Funktionseinheit erzeugten punktartigen Beleuchtungslichtverteilung einachsig abzutasten und dadurch in dem zweiten Betriebszustand gemeinsam mit dem ersten Abtastelement eine zweiachsige Abtastung der Probe mit der durch die rastermikroskopische Funktionseinheit erzeugten punktartigen Beleuchtungslichtverteilung zu bewirken, und eine Steuereinheit, die ausgebildet ist, zwischen dem ersten Betriebszustand und dem zweiten Betriebszustand umzuschalten.

Die Erfindung macht sich den Umstand zu Nutze, dass sowohl ein Schiefebenenmikroskop, z.B. ein OPM- oder ein SCAPE-Mikroskop, als auch Rastermikroskop eingangs genannter Art über ein einachsiges Abtastelement verfügen, d.h. über ein Element, das eine Lichtabtastung längs einer einzigen Abtastachse bewirkt. In dem Schiefebenenmikroskop dient dieses als Abtastelement bezeichnete Element dazu, die lichtblattartige Beleuchtungslichtverteilung zur Volumenbildgebung quer zur Ausbreitungsrichtung des Beleuchtungslichtes zu bewegen. Dagegen bewirkt es in dem Rastermikroskop eine der beiden üblicherweise orthogonalen Abtastbewegungen der punktartigen Lichtverteilung. Somit kann dieses vorliegend als erstes Abtastelement bezeichnete Element sowohl in der lichtblattmikroskopischen Funktionseinheit als auch in der rastermikroskopischen Funktionseinheit zur abtastenden Beleuchtung der Probe genutzt werden. In dem ersten Betriebszustand des Mikroskopsystems, in dem die lichtblattmikroskopische Bildgebung erfolgt, reicht allein das erste Abtastelement aus, um die Probe mit dem Beleuchtungslicht abzutasten. Demgegenüber sieht die Erfindung vor, in dem zweiten Betriebszustand des Mikroskopsystems, welcher der rastermikroskopischen Bildgebung mittels einer punktartigen Beleuchtungslichtverteilung dient, zusätzlich zu dem ersten Abtastelement ein zweites Abtastelement zu nutzen, das ebenfalls eine einachsige Abtastung bewirkt. Dabei liegen die beiden Abtastachsen in dem zweiten Betriebszustand vorzugsweise orthogonal zueinander. Die beiden für sich betrachtet einachsig wirkenden Abtastelemente bilden also in ihrem Zusammenwirken ein zweiachsiges Abtastsystem.

Über das in den beiden erfindungsgemäßen Betriebszuständen genutzte erste Abtastelement kombiniert das Mikroskopsystem die beiden applikativ komplementären Bildgebungsverfahren eines Lichtblattmikroskops und eines punktweise rasternden Mikroskops. Die Umschaltung zwischen diesen beiden Bildgebungsverfahren wird von einer Steuereinheit koordiniert. Diese kann beispielsweise so ausgeführt sein, dass sie allein für die Steuerung der Abtastelemente zuständig ist und ansonsten die Kontrolle separaten Steuergeräten überlässt, die insbesondere die beiden unterschiedlichen Bildgebungsprozesse steuern. Alternativ kann die Steuereinheit aber auch den Gesamtbetrieb des Mikroskopsystems steuern, d.h. auch sämtliche Bildgebungsprozesse.

Vorzugsweise bilden das erste Abtastelement und das zweite Abtastelement in dem zweiten Betriebszustand des Mikroskopsystems ein telezentrisches Abtastsystem.

Die lichtblattmikroskopische Funktionseinheit und die rastermikroskopische Funktionseinheit weisen ein gemeinsames, der Probe zugewandtes Objektiv jeweils zur Beleuchtung und Detektion auf.
Dies ermöglicht einen besonders kompakten Aufbau des erfindungsgemäßen Mikroskopsystems.

Erfindungsgemäß weisen die lichtblattmikroskopische Funktionseinheit und die rastermikroskopische Funktionseinheit eine gemeinsame Fernohroptik auf, die eine Austrittspupille des Objektivs auf das erste Abtastelement abbildet. Da eine zur Erzeugung eines Pupillenbildes einsetzbare Fernrohroptik, wie eingangs erwähnt, besonders abberationsarm und damit vergleichsweise teuer ist, bietet die gemeinsame Nutzung der Fernrohroptik einen erheblichen Kostenvorteil.

Vorzugsweise hat das Mikroskopsystem ein das gemeinsame Objektiv tragendes Mikroskopstativ, das über ein Anschlusselement verfügt, an das die gemeinsame Fernrohroptik anschließbar ist. Auf diese Weise lässt sich das Mikroskopsystem nach Art eines Mikroskopmoduls besonders einfach mit einem schon vorhandenen Mikroskopstativ, z.B. eines aufrechten Mikroskops, eines inversen Mikroskops oder eines Fixed-Stage-Mikroskops kombinieren. Von Vorteil ist hier insbesondere, dass die lichtblattmikroskopische Funktionseinheit und die rastermikroskopische Funktionseinheit über die gemeinsame Fernrohroptik verfügen, so dass nur ein einziges Anschlusselement zur Kopplung an das Mikroskopstativ vorgehalten werden muss.

Das erste Abtastelement und das zweite Abtastelement sind beispielsweise jeweils als Galvanometerspiegel oder mikroelektromechanischer Spiegel (MEMS) ausgeführt. Dabei ist das erste Abtastelement um eine erste Kippachse und das zweite Abtastelement um eine zweite Kippachse, die vorzugsweise senkrecht zur ersten Kippachse liegt, verkippbar.

In einer besonders bevorzugten Ausführungsform ist das erste Abtastelement in dem ersten Betriebszustand innerhalb eines ersten Kippwinkelbereichs und in dem zweiten Betriebszustand innerhalb eines zweiten Kippwinkelbereichs, der von dem ersten Kippwinkelbereich verschieden ist, verkippbar.

Vorzugsweise enthält das Mikroskopsystem ein durch eine Steuereinheit ansteuerbares Umschaltelement zum Umschalten zwischen dem ersten Betriebszustand und dem zweiten Betriebszustand.

Das Umschaltelement ist beispielsweise durch das erste Ablenkelement gebildet, das zur Betriebszustandsumschaltung zwischen einer innerhalb des ersten Kippwinkelbereichs liegenden Kippstellung und einer innerhalb des zweiten Kippwinkelbereichs liegenden Kippstellung verkippbar ist. Diese Ausführungsform nutzt den Umstand, dass von der die Objektivpupille auf das erste Abtastelement abbildenden Fernrohroptik her gesehen zwei für das erste Abtastelement zugängliche Kippwinkelbereiche existieren, die den beiden Betriebszuständen zugeordnet werden können. Damit ist es möglich, dass das erste Abtastelement einerseits die applikativ erforderliche Abtastung längs der ersten Abtastachse vornimmt und andererseits den passenden Kippwinkelbereich auswählt, um den gewünschten Betriebszustand zu realisieren. Dazu kann es zweckmäßig sein, das erste Abtastelement unter Lichteinfallswinkeln ungleich 45 Grad zu nutzen.

In einer alternativen Ausführungsform ist das Umschaltelement durch ein von dem ersten Abtastelement separat vorgesehenes Lichtumlenkelement gebildet. Dieses Lichtumlenkelement ist beispielsweise ein Spiegel oder Prisma, das sich in den Strahlengang fahren und aus diesem entfernen lässt. Es kann auch in Form eines im Strahlengang verbleibenden Umlenkelementes ausgeführt sein, das zur Auswahl des Betriebszustands verstellt, beispielsweise verkippt, wird. Diese Ausführungsform hat den weiteren Vorteil, die Fernrohroptik, welche die Objektivpupille auf das erste Abtastelement abbildet, nur einmal vorhalten zu müssen und nur eine Adaptionsstelle am Mikroskop zu belegen, sofern die Erfindung als Modul für ein herkömmliches Mikroskop ausgeführt ist.

In einer vorteilhaften Ausführungsform umfasst die lichtblattmikroskopische Funktionseinheit eine Beleuchtungsoptik, die ausgebildet ist, die lichtblattartige Beleuchtungslichtverteilung in einem Zwischenbildraum zu erzeugen, eine beidseitig telezentrisch ausgebildete Transportoptik, die ausgebildet ist, die in dem Zwischenbildraum erzeugte lichtblattartige Beleuchtungslichtverteilung in die Probe und einen mit der lichtblattartigen Beleuchtungslichtverteilung beleuchteten Bereich der Probe als Zwischenbild in den Zwischenbildraum abzubilden, und eine Detektionsoptik, die ausgebildet ist, das in dem Zwischenbildraum erzeugte Zwischenbild auf einen Detektor abzubilden, wobei die optischen Achsen der Beleuchtungsoptik, der Transportoptik und der Detektionsoptik einander in dem Zwischenbildraum schneiden, und wobei das erste Abtastelement in der Transportoptik angeordnet und ausgebildet ist, in dem ersten Betriebszustand die lichtblattartige Beleuchtungslichtverteilung in der Probe quer, vorzugsweise senkrecht zur optischen Achse der Transportoptik zu bewegen. Die vorgenannte Transportoptik, die das von der lichtblattmikroskopischen Funktionseinheit und der rastermikroskopischen Funktionseinheit gemeinsam genutzte Fernrohrsystem beinhaltet, stellt ein Zwischenabbildungssystem dar, das die für die Volumenbildgebung erforderlichen Eigenschaften aufweist, nämlich eine Vergrößerung, die dem Brechungsindexverhältnis zwischen Probenraum und Zwischenraum entspricht, um eine korrekte Abbildung der Aperturwinkel zu gewährleisten, und eine beidseitige, d.h. sowohl objektseitige als auch bildseitige Telezentrizität, d.h. eine Lateralvergrößerung, die von der Position längs der optischen Achse unabhängig ist.

Die Verwendung einer beidseitig telezentrischen Transportoptik und einer damit ermöglichten telezentrischen Abtastanordnung hat gegenüber herkömmlichen Lichtblattmikroskopen, deren Zwischenabbildungsoptiken nicht beidseitig telezentrisch sind, u.a. den Vorteil, dass in der Transportoptik keine Verzerrungen verursacht werden.

In einer besonders bevorzugten Ausführungsform bildet die rastermikroskopische Funktionseinheit ein Konfokalmikroskop oder ein Multiphotonenmikroskop.

Die Erfindung wird im Folgenden anhand der Figuren näher erläutert. Darin zeigen:
- Fig. 1: eine schematische Darstellung eines Mikroskopsystems als Ausführungsbeispiel;
- Fig. 2: eine vergrößerte Teilansicht, welche die beiden Abtastelemente des Mikroskopsystems nach Figur 1 zeigt; und
- Fig. 3: eine der Figur 2 entsprechende Teilansicht einer abgewandelten Ausführungsform, die ein separates Lichtumlenkelement zur Umschaltung zwischen den beiden mikroskopischen Funktionseinheiten aufweist.

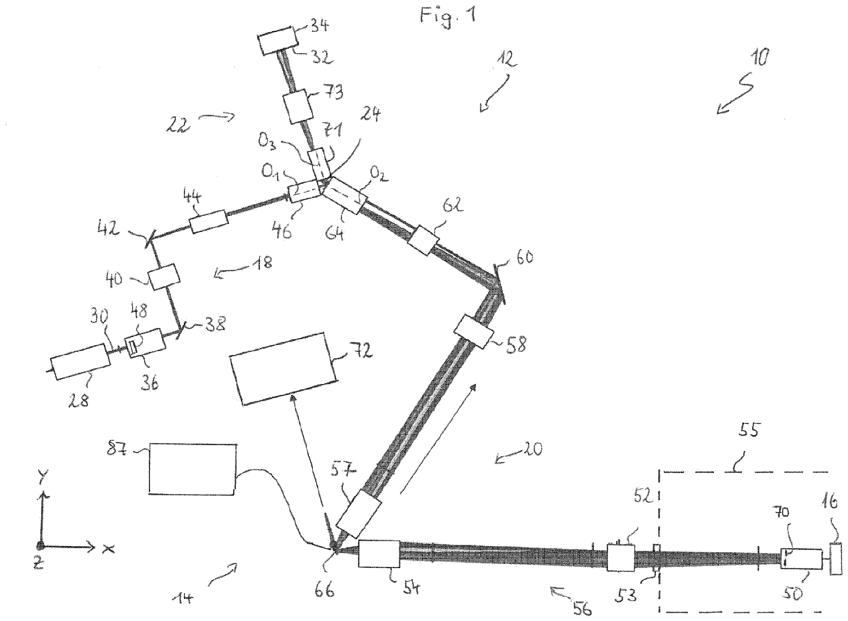

Figur 1 zeigt in schematischer Darstellung den Aufbau eines Mikroskopsystems 10, das ein Ausführungsbeispiel der Erfindung darstellt. Das Mikroskopsystem 10 umfasst eine in Figur 1 allgemein mit 12 bezeichnete lichtblattmikroskopische Funktionseinheit und eine allgemein mit 14 bezeichnete rastermikroskopische Funktionseinheit. Das Mikroskopsystem 10 sieht zwei wahlweise einstellbare Betriebszustände vor, nämlich einen ersten Betriebszustand, in dem die lichtblattmikroskopische Funktionseinheit 12 nach Art eines Schiefebenenmikroskops zur Abbildung einer Probe 16 unter Verwendung einer lichtblattartigen Beleuchtungslichtverteilung verwendet wird, und einen zweiten Betriebszustand, in dem die rastermikroskopische Funktionseinheit 14 die Probe 16 unter Verwendung einer punktartigen Beleuchtungslichtverteilung abbildet.

Im Weiteren wird zunächst die lichtblattmikroskopische Funktionseinheit 12 beschrieben.

Die lichtblattmikroskopische Funktionseinheit 12 umfasst eine Beleuchtungsoptik 18, eine Transportoptik 20 und eine Detektionsoptik 22, deren optischen Achsen O₁, O₂, bzw. O₃ in einem in Figur 1 mit 24 bezeichneten Zwischenbildraum zusammenlaufen, d.h. dort einander schneiden. Die Beleuchtungsoptik 18 dient dazu, das ihr von einer Lichtquelle 28 zugeführte Beleuchtungslicht 30 derart in den Zwischenbildraum 24 zu fokussieren, das dort eine Beleuchtungslichtverteilung nach Art eines Lichtblattes erzeugt wird. Dieses im Zwischenbildraum 24 erzeugte Lichtblatt wird dann durch die Transportoptik 22 in die Probe 16 abgebildet, so dass ein Bereich der Probe 16 mit dem Lichtblatt beleuchtet und zur Emission von Fluoreszenzstrahlung angeregt wird. Die von der Probe 16 abgegebene Fluoreszenzstrahlung gelangt in dem ersten Betriebszustand wiederum in die Transportoptik 20, die so den mit dem Lichtblatt beleuchteten Probenbereich als Zwischenbild in den Zwischenbildraum 24 abbildet. Das in dem Zwischenbildraum 24 erzeugte Zwischenbild des beleuchteten Probenbereichs wird schließlich durch die Detektionsoptik 22 auf eine Detektionsfläche 32 eines Detektors 34 abgebildet.

Die Beleuchtungsoptik 18 enthält in Ausbreitungsrichtung des von der Lichtquelle 28 ausgesendeten Beleuchtungslichtes 30 nacheinander eine Strahlaufbereitungseinheit 36, ein Verstellelement 38, ein Okularlinsensystem 40, ein weiteres Verstellelement 42, einen Tubuslinsenelement 44 sowie ein Beleuchtungsobjektiv 46, das dem Zwischenbildraum 24 zugewandt ist.

Die Strahlaufbereitungseinheit 36 enthält eine Zylinderlinse 48, die im Zusammenwirken mit dem Beleuchtungsobjektiv 46 Teil eines anamorphotischen optischen Systems ist, das die Funktion hat, aus dem von der Lichtquelle 28 emittierten Beleuchtungslicht 30 in dem Zwischenbildraum 24 das Lichtblatt in der gewünschten Form zu erzeugen. Dabei fokussiert die Zylinderlinse 48 das Beleuchtungslicht 30 in das von dem Okularlinsensystem 40 und dem Tubuslinsensystem 44 erzeugte Bild der Pupille des Beleuchtungsobjektivs 46. In dem Ausführungsbeispiel nach Figur 1 bilden das Tubuslinsensystem 44 und das Okularlinsensystem 40 somit ein Galilei-Fernrohr mit reellem Zwischenbild. Es ist jedoch darauf hinzuweisen, dass die in dem Ausführungsbeispiel nach Figur 1 gewählte Realisierung des anamorphotischen Systems rein beispielhaft zu verstehen ist, so ist beispielsweise insbesondere bei kleineren numerischen Aperturen auch möglich, unter Verzicht auf das Beleuchtungsobjektiv 46 allein die Zylinderlinse 48 zur Formung des Lichtblattes zu nutzen.

Die beiden in der Beleuchtungsoptik 18 enthaltenen Verstellelemente 38 und 42 bilden eine Verstellvorrichtung, die es ermöglicht, das Lichtblatt relativ zur Detektionsfläche 32 des Detektors 34 zu justieren, genauer gesagt, relativ zu dem durch die Detektionsoptik 22 in dem Zwischenbildraum 24 erzeugten Bild der Detektionsfläche 32, dem das Lichtblatt überlagert ist. Dabei ist das Verstellelement 42 in einer Ebene angeordnet, die zu einer Bildebene des Beleuchtungsobjektivs 46 konjugiert ist. Demnach wird durch Verkippen des Verstellelementes 42 der Winkel geändert, unter dem das Beleuchtungslicht 30 aus dem Beleuchtungsobjektiv 46 tritt. Das Verstellelement 38 ist in einer Ebene angeordnet, die zur Pupillenebene des Beleuchtungsobjektivs 46 konjugiert ist. Durch das Verstellelement 38 lässt sich somit die Position des aus dem Beleuchtungsobjektiv 46 austretenden Beleuchtungslichts 30 einstellen. Die beiden Verstellelemente 38 und 42 erlauben es also, Position und Winkel des Lichtblattes unabhängig voneinander zu justieren.

Die Beleuchtungsoptik 18 kann für die Lichtblatterzeugung weitere, in Figur 1 nicht explizit gezeigte Elemente enthalten, beispielsweise eine Feldblende und/oder eine Aperturblende. Die Feldblende hat hierbei die Funktion, das Lichtblatt in der Richtung, in der es ausgedehnt ist, zu begrenzen. Demgegenüber dient die Aperturblende der Begrenzung des Öffnungswinkels, mit dem das Lichtblatt fokussiert wird.

Die Transportoptik 20 enthält von der Probe 16 her gesehen ein Objektiv 50, ein Tubuslinsensystem 52, ein Okularlinsensystem 54, ein weiteres Okularlinsensystem 56, ein weiteres Tubuslinsensystem 58, ein Umlenkelement 60, ein Afokalsystem 62 sowie ein Zwischenabbildungsobjektiv 64. Sowohl das Tubuslinsensystem 52 und das Okularlinsensystem 48 als auch das Tubuslinsensystem 58 und das Okularlinsensystem 56 bilden jeweils eine Galilei-Fernrohroptik. Die Transportoptik 20 ist als beidseitig telezentrisches optisches System ausgeführt. Das in der Transportoptik 20 enthaltene Afokalsystem 62 dient dazu, die für den gewünschten Volumenbildtransport erforderliche Vergrö-ßerungsanpassung an das Brechungsindexverhältnis zwischen Probenraum und Zwischenbildraum 24 vorzunehmen. Die Fernrohroptik 56 ist über ein Anschlusselement 53 an ein Mikroskopstativ 55 gekoppelt, an dem das Objektiv 50 gehalten ist.

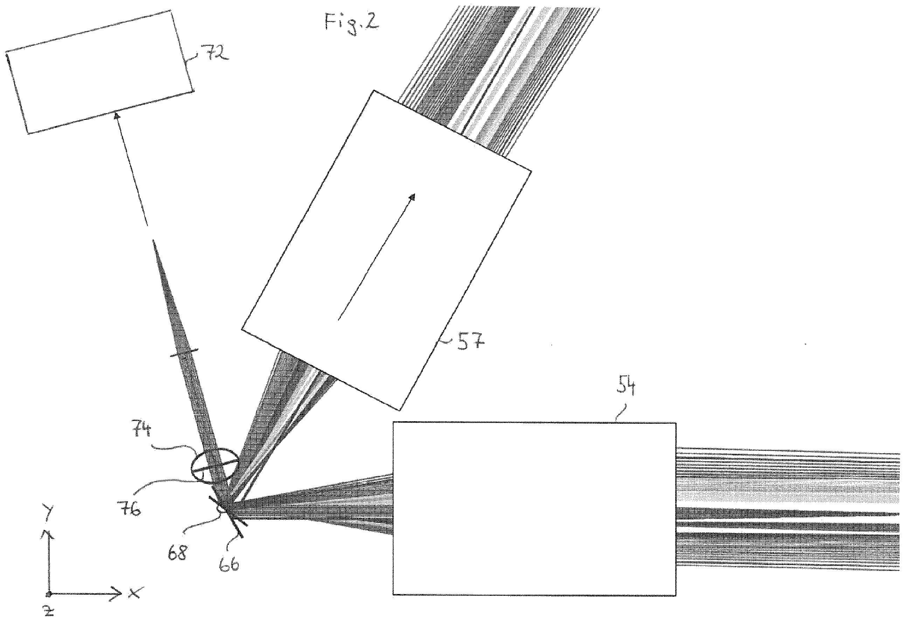

Wie insbesondere in der vergrößerten Teilansicht nach Figur 2 zu erkennen ist, enthält die lichtblattmikroskopische Funktionseinheit 12 in der Transportoptik 20 ein erstes Abtastelement 66, das beispielsweise als Galvanometerspiegel oder MEMS-Spiegel ausgeführt ist. Das Abtastelement 50 ist um eine Kippachse 68, die unter Bezugnahme auf das in Figur 2 angegebene Koordinatensystem mit der z-Achse zusammenfällt, verkippbar. In dem ersten Betriebszustand des Mikroskopsystems 10 dient das Abtastelement 66 dazu, die Probe 16 lateral, d.h. quer zur optischen Achse des Objektivs 50 mit dem Lichtblatt abzutasten. Um diese einachsige Abtastung zu bewirken, wird das Abtastelement 66 innerhalb eines vorbestimmten ersten Kippwinkelbereichs um die Kippachse 68 verkippt. Das Abtastelement 66 ist an einer Stelle angeordnet, an der die Fernrohroptik 56 ein reelles Bild einer Austrittspupille 70 des Objektivs 50 erzeugt. Somit bildet mit anderen Worten die Fernrohroptik 56 die Austrittspupille 70 auf das erste Abtastelement 66 ab.

Die Detektionsoptik 22 enthält ein dem Zwischenbildraum 24 zugewandtes Detektionsobjektiv 72 sowie ein Tubuslinsensystem 74. Über das Detektionsobjektiv 72 und das Tubuslinsensystem 74 wird das durch die Transportoptik 20 in dem Zwischenbildraum 24 erzeugte Zwischenbild des mit dem Lichtblatt beleuchteten Probenbereichs auf der Detektorfläche 32 des Detektors 40 abgebildet.

In dem ersten Betriebszustand des Mikroskopsystem 10 sind die Beleuchtungsoptik 18, die Transportoptik 20 und die Detektionsoptik 22 der lichtblattmikroskopischen Funktionseinheit 12 derart aufeinander ausgerichtet, dass ihre optischen Achsen O₁, O₂, O₃ im Zwischenbildraum 24 zusammenlaufen. Dadurch erfolgt die Einkopplung des von der Lichtquelle 28 erzeugten Beleuchtungslichts 30 in die Transportoptik 20 gleichsam durch eine geometrische Kombination im Bereich des Zwischenbildes, was einen Verzicht auf dichroitische Strahlteilerelemente im Bereich der Transportoptik 20 ermöglicht. Somit kann ein die Abbildungsleistung der Transportoptik 20 beeinträchtigender Pupillenversatz zuverlässig vermieden werden.

Im Folgenden wird die rastermikroskopische Funktionseinheit 14 des Mikroskopsystems 10 beschrieben, die in dem zweiten Betriebszustand in Betrieb genommen ist.

Die rastermikroskopische Funktionseinheit 14 nutzt wie die lichtblattmikroskopische Funktionseinheit 12 das der Probe 16 zugewandte Objektiv 50 sowie die aus dem Tubuslinsensystem 52 und dem Okularlinsensystem 54 gebildete Fernrohroptik 56. Auch das erste Abtastelement 66 wird in dem zweiten Betriebszustand von der rastermikroskopischen Funktionseinheit 14 genutzt. Dies bedeutet, dass die beiden Funktionseinheiten 12, 14 des Mikroskopsystems 10 gemeinsam genutzte Komponenten in Form des Objektivs 50, der Fernrohroptik 56 und des ersten Abtastelementes 66 aufweisen.

Des Weiteren verfügt die rastermikroskopische Funktionseinheit 14 über ein von der lichtblattmikroskopischen Funktionseinheit 12 räumlich getrenntes Anregungs-/Detektionsmodul 72. Dieses enthält die an sich bekannten und deshalb an dieser Stelle nicht näher erläuterten Komponenten, die für die Realisierung eines herkömmlichen punktweise rasternden Mikroskops erforderlich sind, z.B. eine oder mehrere Lichtquellen, einen oder mehrere Detektoren, im Falle eines Konfokalmikroskops zusätzlich noch Lochblenden für die Beleuchtung und Detektion, etc.. Entsprechendes gilt in anderer, jedoch an sich auch bekannter Ausgestaltung für den Fall, dass die rastermikroskopische Funktionseinheit 14 z.B. als Multiphotonenmikroskop ausgeführt sein soll.

Die rastermikroskopische Funktionseinheit 14 enthält ferner ein zweites Abtastelement 74, das allein in der vergrößerten Teilansicht nach Figur 2 zu sehen ist. Wie das erste Abtastelement 66 ist auch das zweite Abtastelement 74 beispielsweise als einachsiger Galvanometerspiegel oder MEMS-Spiegel realisiert. Das zweite Abtastelement 74 ist um eine Kippachse 76, die orthogonal zur Kippachse 68 des ersten Abtastelementes 66 liegt, verkippbar. An dieser Stelle ist darauf hinzuweisen, dass die Darstellung in den Figuren 1 und 2 stark vereinfacht ist. Insbesondere ist zu beachten, dass das zweite Abtastelement 76 gegenüber der Zeichnungsebene nach Figur 2 geneigt ist, beispielsweise um 45 Grad. Demzufolge verläuft auch der Strahlengang zwischen dem zweiten Abtastelement 74 und dem Anregungs-/Detektionsmodul 72 nicht in der Zeichnungsebene, sondern aus dieser heraus oder in diese hinein. Außerdem ist darauf hinzuweisen, dass zwischen dem ersten Abtastelement 66 und dem zweiten Abtastelement 74 in Figur 2 nicht explizit gezeigte Komponenten vorhanden sein können, wie insbesondere eine zusätzliche Fernrohroptik, durch die ein weiteres reelles Bild der Austrittspupille 70 des Objektivs 50 erzeugt werden kann. Dadurch ist es möglich, das zweite Abtastelement 74, das sich am Ort dieses Pupillenbildes befinden soll, im Strahlengang der rastermikroskopischen Funktionseinheit 14 beliebig zu positionieren.

In dem zweiten Betriebszustand des Mikroskopsystems 10 bilden das erste einachsige Abtastelement 66 und das zweite einachsige Abtastelement 76 ein telezentrisches zweiachsiges Abtastsystem, das dazu genutzt werden kann, die Probe 16 mit der in der rastermikroskopischen Funktionseinheit 14 erzeugten punktartigen Beleuchtungslichtverteilung zweiachsig, d.h. längs zweier vorzugsweise orthogonaler Abtastachsen abzutasten. Beide dieses zweiachsige Abtastsystem bildenden Abtastelemente 66 und 76 sind konjugiert zur Austrittspupille 70 des Objektivs 50.

Es ist darauf hinzuweisen, dass die vorstehend genannte Realisierung des zweiachsigen Abtastsystems rein beispielhaft zu verstehen ist. Insbesondere besteht auch die Möglichkeit, ein telezentrisches zweiachsiges Abtastsystem auszubilden, indem durch Verwendung zweier zusätzlicher einachsiger Abtastelemente ein virtueller Kipppunkt erzeugt wird, wie dies in der DE 40261302 C2 beschrieben ist.

In dem zweiten Betriebszustand hat also das erste Abtastelement 66 die Funktion, im Zusammenwirken mit dem zweiten Abtastelement 74 für eine zweiachsige Abtastung der Probe 16 mit der punktartigen Beleuchtungslichtverteilung zu sorgen. Hierzu wird das erste Abtastelement 68 innerhalb eines zweiten Kippwinkelbereichs, der von dem in dem ersten Betriebszustand genutzten ersten Kippwinkelbereich verschieden ist, um die Kippachse 68 verkippt. Somit existieren von der gemeinsamen Fernrohroptik 56 her gesehen zwei mittels des ersten Abtastelementes 66 zugängliche Kippwinkelbereiche, von denen der erste dem ersten Betriebszustand und der zweite dem zweiten Betriebszustand zugeordnet ist. Dies bietet die Möglichkeit, das erste Abtastelement 66 nicht nur für den eigentlichen Abtastvorgang, der in dem ersten bzw. in dem zweiten Betriebszustand durchgeführt wird, zu nutzen, sondern zusätzlich als Element zum Umschalten zwischen dem ersten Betriebszustand und dem zweiten Betriebszustand. Befindet sich nämlich das erste Abtastelement 66 in einer Kippstellung, die innerhalb des ersten Kippwinkelbereichs liegt, so ist das erste Abtastelement 66 in der gezeigten Anordnung zwangsläufig der lichtblattmikroskopischen Funktionseinheit 12 zugeschaltet, wodurch der erste Betriebszustand realisiert ist. Wird dann das Abtastelement in den zweiten Kippwinkelbereich verkippt, so wird es der rastermikroskopischen Funktionseinheit 14 zugeschaltet, wodurch der zweite Betriebszustand gewählt wird.

Das Mikroskopsystem 10 verfügt ferner über eine Steuereinheit 87, die das Umschalten der Betriebszustande durch eine entsprechende Ansteuerung des ersten Abtastelementes 66 kontrolliert. Die Steuereinheit 87 kann so ausgeführt sein, dass sie auch einige andere oder gar alle Betriebsprozesse des Mikroskopsystems 10 steuert.

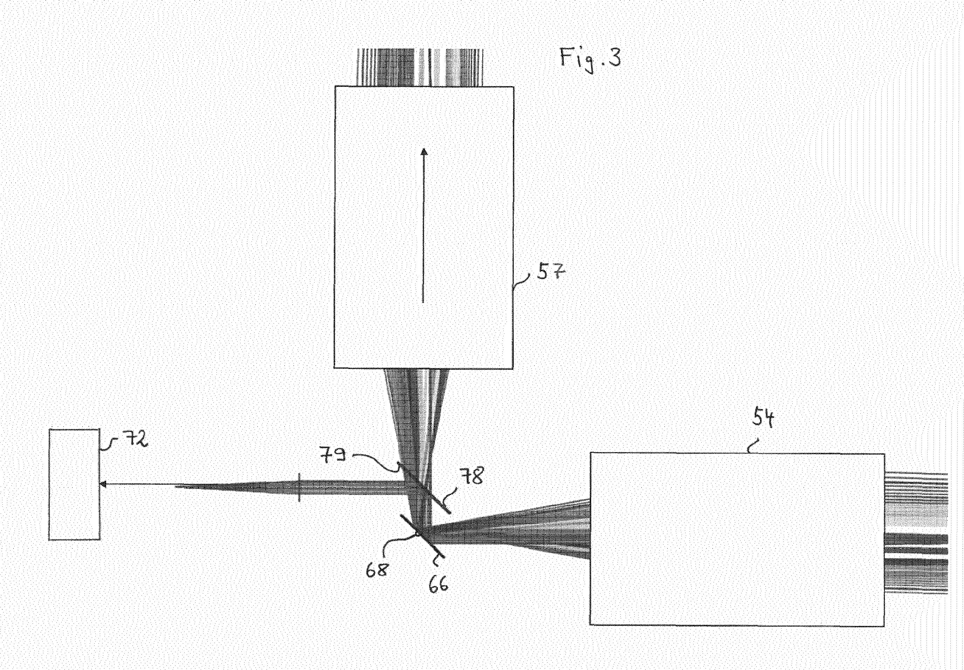

Figur 3 zeigt eine abgewandelte Ausführungsform, in der für die Umschaltung zwischen den beiden Betriebszuständen eigens ein separates Umschaltelement 78 vorgesehen ist. In der gezeigten Ausführungsform ist das Umschaltelement 78 beispielsweise ein Spiegel, der eine dem zweiten Abtastelement 66 zugewandte Spiegelfläche 79 aufweist und in den Strahlengang zwischen den beiden Okularlinsensystemen 54, 56 eingebracht wird, um die rastermikroskopische Funktionseinheit 14 wirksam zu schalten, d.h. den zweiten Betriebszustand einzustellen. Ist der Spiegel 78 aus dem Strahlengang entfernt, so befindet sich das Mikroskopsystem 10 in dem ersten Betriebszustand.

Es versteht sich von selbst, dass die Erfindung nicht auf die vorstehend beschriebenen Ausführungsbeispiele beschränkt sein soll.

So ist es beispielsweise möglich, in der Beleuchtungsoptik 18 der lichtblattmikroskopischen Funktionseinheit 12 zur Lichtblatterzeugung anstelle des Zylinderspiegels 48 ein weiteres einachsiges Abtastelement, beispielsweise in Form eines Galvanometerspiegels oder eines MEMS-Spiegels vorzusehen. Ein solches Abtastelement kann beispielsweise an der Stelle angeordnet werden, an der sich in dem Ausführungsbeispiel nach Figur 1 das Verstellelement 38 befindet. Das Abtastelement bewirkt dann eine Abtastbewegung des Beleuchtungslichts 30, durch die das gewünschte Lichtblatt sequenziell aufgebaut wird. Die Steuereinheit 87 sorgt dann dafür, dass der Betrieb dieses Abtastelementes mit den anderen Systemkomponenten, insbesondere mit dem ersten Abtastelement 66 synchronisiert ist.

In der vorstehend genannten Abwandlung könnte das in der Beleuchtungsoptik 18 zusätzlich vorhandene weitere Abtastelement in gleicher Weise zur funktionsmäßigen Ankopplung einer punktweise rasternden Funktionseinheit genutzt werden, wie dies weiter oben in dem Ausführungsbeispiel nach den Figuren 1 bis 3 für das erste Abtastelement 66 beschrieben ist. Demnach könnte ein Kippwinkelbereich dieses weiteren Abtastelementes, der nicht zur Lichtblatterzeugung genutzt wird, entsprechend dem zweiten Kippwinkelbereich des Abtastelementes 66 für die rastermikroskopische Abtastung und ggf. auch für die Umschaltung zwischen den beiden Betriebszuständen eingesetzt werden.

### Bezugszeichenliste

- 10: Mikroskopsystem
- 12: lichtblattmikroskopische Funktionseinheit
- 14: rastermikroskopische Funktionseinheit
- 16: Probe
- 18: Beleuchtungsoptik
- 20: Transportoptik
- 22: Detektionsoptik
- 24: Zwischenbildraum
- 28: Lichtquelle
- 30: Beleuchtungslicht
- 32: Detektorfläche
- 34: Detektor
- 36: Strahlaufbereitungseinheit
- 38: Verstellelement
- 40: Okularlinsensystem
- 42: Verstellelement
- 44: Tubuslinsensystem
- 46: Beleuchtungsobjektiv
- 48: Zylinderspiegel
- 50: Objektiv
- 52: Tubuslinsensystem
- 53: Anschlusselement
- 54: Okularlinsensystem
- 55: Mikroskopstativ
- 56: Fernrohroptik
- 57: Okularlinsensystem
- 58: Tubuslinsensystem
- 60: Umlenksystem
- 62: Afokalsystem
- 64: Zwischenabbildungsobjektiv
- 66: erstes Abtastelement
- 68: Kippachse
- 70: Austrittspupille
- 71: Detektionsobjektiv
- 72: Anregungs-/Detektionsmodul
- 73: Tubuslinsensystem
- 74: zweites Abtastelement
- 76: Kippachse
- 78: Umschaltelement
- 79: Spiegelfläche
- 87: Steuereinheit
- O₁, O₂, O₃: Achsen

## Patentansprüche

1. Mikroskopsystem (10), umfassend:
- eine lichtblattmikroskopische Funktionseinheit (12), die eine Probe (16) in einem ersten Betriebszustand des Mikroskopsystems (10) mit einer lichtblattartigen Beleuchtungslichtverteilung beleuchtet und abbildet,
- eine rastermikroskopische Funktionseinheit (14), die die Probe (16) in einem zweiten Betriebszustand des Mikroskopsystems (10) mit einer punktartigen Beleuchtungslichtverteilung beleuchtet und abbildet,
- ein erstes Abtastelement (66), das die Probe (16) in dem ersten Betriebszustand mit der durch die lichtblattmikroskopische Funktionseinheit (12) erzeugten lichtblattartigen Beleuchtungslichtverteilung einachsig abtastet und die Probe (16) in dem zweiten Betriebszustand mit der durch die rastermikroskopische Funktionseinheit (14) erzeugten punktartigen Beleuchtungslichtverteilung einachsig abtastet,
- ein zweites Abtastelement, das die Probe (16) in dem zweiten Betriebszustand mit der durch die rastermikroskopische Funktionseinheit (14) erzeugten punktartigen Beleuchtungslichtverteilung einachsig abtastet und dadurch in dem zweiten Betriebszustand gemeinsam mit dem ersten Abtastelement (66) eine zweiachsige Abtastung der Probe (16) mit der durch die rastermikroskopische Funktionseinheit (14) erzeugten punktartigen Beleuchtungslichtverteilung erzeugt, und
- eine Steuereinheit (87), die zwischen dem ersten Betriebszustand und dem zweiten Betriebszustand umschaltet,
- wobei die lichtblattmikroskopische Funktionseinheit (12) und die rastermikroskopische Funktionseinheit (14) ein gemeinsames, der Probe (16) zugewandtes Objektiv (50) aufweisen, das jeweils sowohl zur Beleuchtung als auch zur Detektion dient, und
- wobei die lichtblattmikroskopische Funktionseinheit (12) und die rastermikroskopische Funktionseinheit (14) eine gemeinsame Fernrohroptik (56) aufweisen, die eine Austrittspupille (70) des gemeinsamen Objektivs (50) auf das erste Abtastelement (66) abbildet.

2. Mikroskopsystem (10) nach Anspruch 1, **dadurch gekennzeichnet, dass** das erste Abtastelement (66) und das zweite Abtastelement (76) in dem zweiten Betriebszustand ein telezentrisches Abtastsystem bilden.

3. Mikroskopsystem (10) nach Anspruch 1 oder 2, **gekennzeichnet durch** ein das gemeinsame Objektiv tragendes Mikroskopstativ (55), das ein Anschlusselement (53) hat, an das die gemeinsame Fernrohroptik (56) anschließbar ist.

4. Mikroskopsystem (10) nach einem der vorhergehenden Ansprüche, bei dem das erste Abtastelement (66) um eine erste Kippachse (66) und das zweite Abtastelement (74) um eine zweite Kippachse (76) verkippbar ist.

5. Mikroskopsystem (10) nach Anspruch 4, bei dem das erste Abtastelement (66) in dem ersten Betriebszustand innerhalb eines ersten Kippwinkelbereichs und in dem zweiten Betriebszustand innerhalb eines zweiten Kippwinkelbereichs, der von dem ersten Kippwinkelbereich verschieden ist, verkippbar ist.

6. Mikroskopsystem (10) nach einem der vorhergehenden Ansprüche, umfassend ein durch die Steuereinheit ansteuerbares Umschaltelement (66, 78), das zwischen dem ersten Betriebszustand und dem zweiten Betriebszustand umschaltet.

7. Mikroskopsystem (10) nach den Ansprüchen 5 und 6, bei dem das Umschaltelement durch das erste Ablenkelement (66) gebildet ist, das zum Umschalten zwischen dem ersten Betriebszustand und dem zweiten Betriebszustand zwischen einer innerhalb des ersten Kippwinkelbereichs liegenden Kippstellung, die den ersten Betriebszustand realisiert, und einer innerhalb des zweiten Kippwinkelbereichs liegenden Kippstellung, die den zweiten Betriebszustand realisiert, verkippbar ist.

8. Mikroskopsystem (10) nach Anspruch 6, bei dem als Umschaltelement ein von dem ersten Ablenkelement (66) separates, in den Strahlengang einfügbares Lichtumlenkelement (78) angeordnet ist, wobei, wenn das Lichtumlenkelement (78) aus dem Strahlengang entfernt ist, sich das Mikroskopsystem (10) in dem ersten Betriebszustand befindet, und wobei das Lichtumlenkelement (78), wenn es im Strahlengang eingefügt ist, die rastermikroskopische Funktionseinheit (14) wirksam schaltet und dadurch den zweiten Betriebszustand einstellt.

9. Mikroskopsystem (10) nach einem der vorhergehenden Ansprüche, bei dem die rastermikroskopische Funktionseinheit (14) ein von der lichtblattmikroskopischen Funktionseinheit (12) räumlich getrenntes Anregungs-/Detektionsmodul (72) aufweist, das in dem zweiten Betriebszustand wirksam geschaltet ist.

10. Mikroskopsystem nach einem der vorhergehenden Ansprüche, bei dem die lichtblattmikroskopische Funktionseinheit (12) umfasst:
eine Beleuchtungsoptik (18), die ausgebildet ist, die lichtblattartige Beleuchtungslichtverteilung in einem Zwischenbildraum (24) erzeugen,
eine beidseitig telezentrisch ausgebildete Transportoptik (20), die ausgebildet ist, die in dem Zwischenbildraum (24) erzeugte lichtblattartige Beleuchtungslichtverteilung in die Probe (16) und einen mit der lichtblattartigen Beleuchtungslichtverteilung beleuchteten Bereich der Probe (16) als Zwischenbild in den Zwischenbildraum (24) abzubilden, und
eine Detektionsoptik (22), die ausgebildet ist, das in dem Zwischenbildraum (24) erzeugte Zwischenbildes auf einen Detektor (34) abzubilden,
wobei die optischen Achsen (O₁, O₂, O₃) der Beleuchtungsoptik (18), der Transportoptik (20) und der Detektionsoptik (22) einander in dem Zwischenbildraum (24) schneiden, und
wobei das erste Abtastelement (66) in der Transportoptik (20) angeordnet und ausgebildet ist, in dem ersten Betriebszustand die lichtblattartige Beleuchtungslichtverteilung in der Probe (16) quer zur optischen Achse (O₂) der Transportoptik (20) zu bewegen.

11. Mikroskopsystem (10) nach Anspruch 10, bei dem die Transportoptik (20) strahlteilerfrei ist.

12. Mikroskopsystem (10) nach einem der vorhergehenden Ansprüche, bei dem die rastermikroskopische Funktionseinheit (14) ein Konfokalmikroskop oder ein Multiphotonenmikroskop bildet.

13. Verfahren zum Abbildung einer Probe (16) unter Verwendung eines Mikroskopsystems (10) mit folgenden Schritten:
- Einstellen eines ersten Betriebszustands des Mikroskopsystems (10), in dem eine Probe (16) mit einer lichtblattmikroskopischen Funktionseinheit (12) mit einer lichtblattartigen Beleuchtungslichtverteilung beleuchtet und abgebildet wird,
- Einstellen eines zweiten Betriebszustands des Mikroskopsystems (10), in dem eine Probe (16) mit einer rastermikroskopischen Funktionseinheit (14) mit einer punktartigen Beleuchtungslichtverteilung beleuchtet und abgebildet wird,
- wobei die Probe (16) in dem ersten Betriebszustand mit der durch die lichtblattmikroskopische Funktionseinheit (12) erzeugten lichtblattartigen Beleuchtungslichtverteilung mittels eines erstes Abtastelements (66) einachsig abgetastet wird, und
- wobei die Probe (16) in dem zweiten Betriebszustand mit der durch die rastermikroskopische Funktionseinheit (14) erzeugten punktartigen Beleuchtungslichtverteilung sowohl mittels des ersten Abtastelementes (66) einachsig abgetastet wird als auch mittels eines weiteren, zweiten Abtastelementes (76) in einer weiteren Achse einachsig abgetastet wird, wodurch unter Verwendung beider Abtastelemente (66, 76) eine zweiachsige Abtastung der Probe (16) erzeugt wird,
- wobei die lichtblattmikroskopische Funktionseinheit (12) und die rastermikroskopische Funktionseinheit (14) ein gemeinsames, der Probe (16) zugewandtes Objektiv (50) aufweisen, das jeweils sowohl zur Beleuchtung als auch zur Detektion dient, und
- wobei die lichtblattmikroskopische Funktionseinheit (12) und die rastermikroskopische Funktionseinheit (14) eine gemeinsame Fernrohroptik (56) aufweisen, die eine Austrittspupille (70) des gemeinsamen Objektivs (50) auf das erste Abtastelement (66) abbildet.

## Claims

1. A microscope system (10), comprising:
- a light sheet microscopic functional unit (12) that illuminates and images a sample (16) in a first operating state of the microscope system (10) with a light sheet-like illumination light distribution,
- a scanning microscopic functional unit (14) that illuminates and images the sample (16) in a second operating state of the microscope system (10) with a point-like illumination light distribution,
- a first scanning element (66) that uniaxially scans the sample (16) in the first operating state with the light sheet-like illumination light distribution generated by the light sheet microscopic functional unit (12), and uniaxially scans the sample (16), in the second operating state, with the point-like illumination light distribution generated by the scanning microscopic functional unit (14),
- a second scanning element that uniaxially scans the sample (16) in the second operating state with the point-like illumination light distribution generated by the scanning microscopic functional unit (14) and thereby, in the second operating state, together with the first scanning element (66), generates a biaxial scanning of the sample (16) with the point-like illumination light distribution generated by the scanning microscopic functional unit (14), and
- a control unit (87) that switches between the first operating state and the second operating state,
- wherein the light sheet microscopic functional unit (12) and the scanning microscopic functional unit (14) have a common objective (50) facing toward the sample (16), which objective (50) respectively serves for both illumination and detection, and
- wherein the light sheet microscopic functional unit (12) and the scanning microscopic functional unit (14) have a common telescope optical system (56) that images an exit pupil (70) of the common objective (50) onto the first scanning element (66).

2. The microscope system (10) according to claim 1, **characterized in that** the first scanning element (66) and the second scanning element (76) form a telecentric scanning system in the second operating state.

3. The microscope system (10) according to claim 1 or 2, **characterized by** a microscope stand (55) carrying the common objective, which microscope stand (55) has a connection element (53) to which the common telescope optical system (56) can be connected.

4. The microscope system (10) according to one of the preceding claims, in which the first scanning element (66) is tiltable about a first tilt axis (68), and the second scanning element (74) is tiltable about a second tilt axis (76).

5. The microscope system (10) according to claim 4, in which, in the first operating state, the first scanning element (66) is tiltable within a first tilt angle range, and in the second operating state, is tiltable within a second tilt angle range that differs from the first tilt angle range.

6. The microscope system (10) according to one of the preceding claims, comprising a switching element (66, 78) which can be controlled by the control unit and which switches between the first operating state and the second operating state.

7. The microscope system (10) according to claims 5 and 6, in which the switching element is formed by the first deflection element (66), which is tiltable between a tilt position situated within the first tilt angle range, which realizes the first operating state, and a tilt position situated within the second tilt angle range, which realizes the second operating state, for switching between the first operating state and the second operating state.

8. The microscope system (10) according to claim 6, in which a light deflection element (78) which is separate from the first deflection element (66) and can be inserted into the beam path is arranged as a switching element, wherein, when the light deflection element (78) is removed from the beam path, the microscope system (10) is in the first operating state, and wherein the light deflection element (78), when inserted into the beam path, switches the scanning microscopic functional unit (14) to be effective and thereby sets the second operating state.

9. The microscope system (10) according to one of the preceding claims, in which the scanning microscopic functional unit (14) has an excitation/detection module (72) which is spatially separate from the light sheet microscopic functional unit (12) and is switched to be effective in the second operating state.

10. The microscope system according to one of the preceding claims, in which the light sheet microscopic functional unit (12) comprises:
an illumination optical system (18) which is configured to generate the light sheet-like illumination light distribution in an intermediate image space (24),
a transport optical system (20) that is designed to be telecentric on both sides, and that is configured to image the light sheet-like illumination light distribution, generated in the intermediate image space (24), into the sample (16) and to image a region, illuminated with the light sheet-like illumination light distribution, of the sample (16) as an intermediate image into the intermediate image space (24), and
a detection optical system (22) that is configured to image the intermediate image generated in the intermediate image space (24) onto a detector (34),
wherein the optical axes (O₁, O₂, O₃) of the illumination optical system (18), the transport optical system (20) and the detection optical system (22) intersect one another in the intermediate image space (24), and
wherein the first scanning element (66) is arranged in the transport optical system (20) and is configured, in the first operating state, to move the light sheet-like illumination light distribution in the sample (16) transversally to the optical axis (O₂) of the transport optical system (20).

11. The microscope system (10) according to claim 10, in which the transport optical system (20) has no beam splitter.

12. The microscope system (10) according to one of the preceding claims, in which the scanning microscopic functional unit (14) forms a confocal microscope or a multiphoton microscope.

13. A method for imaging a sample (16) using a microscope system (10), having the following steps:
- setting a first operating state of the microscope system (10), in which a sample (16) is illuminated and imaged with a light sheet microscopic functional unit (12) having a light sheet-like illumination light distribution,
- setting a second operating state of the microscope system (10), in which a sample (16) is illuminated and imaged with a scanning microscopic functional unit (14) having a point-like illumination light distribution,
- wherein the sample (16), in the first operating state, is uniaxially scanned with the light sheet-like illumination light distribution generated by the light sheet microscopic functional unit (12), by means of a first scanning element (66), and
- wherein the sample (16), in the second operating state, is both uniaxially scanned with the point-like illumination light distribution generated by the scanning microscopic functional unit (14), by means of the first scanning element (66), and uniaxially scanned by means of an additional, second scanning element (76) in an additional axis, whereby a biaxial scanning of the sample (16) is generated using both scanning elements (66, 76),
- wherein the light sheet microscopic functional unit (12) and the scanning microscopic functional unit (14) have a common objective (50) facing toward the sample (16), which objective (50) respectively serves for both illumination and detection, and
- wherein the light sheet microscopic functional unit (12) and the scanning microscopic functional unit (14) have a common telescope optical system (56) that images an exit pupil (70) of the common objective (50) onto the first scanning element (66).

## Revendications

1. Système de microscopie (10) comprenant :
- une unité fonctionnelle de microscopie à nappe de lumière (12) qui éclaire et reproduit un échantillon (16) dans un premier état de fonctionnement du système formant microscope (10) avec une distribution de lumière d'éclairage en forme de nappe de lumière,
- une unité fonctionnelle de microscopie à balayage (14) qui éclaire et reproduit l'échantillon (16) dans un deuxième état de fonctionnement du système de microscopie (10) avec une distribution de lumière d'éclairage ponctuelle,
- un premier élément de balayage (66) qui balaye l'échantillon (16) suivant un axe unique dans le premier état de fonctionnement avec la distribution de lumière d'éclairage en forme de nappe de lumière générée par l'unité fonctionnelle de microscopie à nappe de lumière (12) et qui balaye l'échantillon (16) suivant un axe unique dans le deuxième état de fonctionnement avec la distribution de lumière d'éclairage ponctuelle générée par l'unité fonctionnelle de microscopie à balayage (14),
- un deuxième élément de balayage qui balaye l'échantillon (16) suivant un axe unique dans le deuxième état de fonctionnement avec la distribution de lumière d'éclairage ponctuelle générée par l'unité fonctionnelle de microscopie à balayage (14) et qui génère ainsi dans le deuxième état de fonctionnement, conjointement avec le premier élément de balayage (66), un balayage de l'échantillon (16) suivant deux axes avec la distribution de lumière d'éclairage ponctuelle générée par l'unité fonctionnelle de microscopie à balayage (14), et
- une unité de commande (87) qui commute entre le premier état de fonctionnement et le deuxième état de fonctionnement,
- dans lequel l'unité fonctionnelle de microscopie à nappe de lumière (12) et l'unité fonctionnelle de microscopie à balayage (14) comportent un objectif commun (50) qui est dirigé vers l'échantillon (16), qui sert à la fois à l'éclairage et à la détection, et
- dans lequel l'unité fonctionnelle de microscopie à nappe de lumière (12) et l'unité fonctionnelle de microscopie à balayage (14) comportent un objectif de lunette commun (56) qui reproduit une pupille de sortie (70) de l'objectif commun (50) sur le premier élément de balayage (66).

2. Système de microscopie (10) selon la revendication 1, **caractérisé en ce que** le premier élément de balayage (66) et le deuxième élément de balayage (76) forment un système de balayage télécentrique dans le deuxième état de fonctionnement.

3. Système de microscopie (10) selon la revendication 1 ou 2, **caractérisé par** un support de microscope (55) qui porte l'objectif commun et qui comporte un élément de raccordement (53) auquel l'optique de lunette commun (56) peut être raccordé.

4. Système de microscopie (10) selon l'une des revendications précédentes, dans lequel le premier élément de balayage (66) peut être incliné sur un premier axe d'inclinaison (68) et le deuxième élément de balayage (74) peut être incliné sur un deuxième axe d'inclinaison (76) .

5. Système de microscopie (10) selon la revendication 4, dans lequel le premier élément de balayage (66) peut être incliné, dans le premier état de fonctionnement, dans une première plage d'angles d'inclinaison et, dans le deuxième état de fonctionnement, dans une deuxième plage d'angles d'inclinaison qui est différente de la première plage d'angles d'inclinaison.

6. Système de microscopie (10) selon l'une des revendications précédentes, comprenant un élément de commutation (66, 78) qui peut être commandé par l'unité de commande et qui commute entre le premier état de fonctionnement et le deuxième état de fonctionnement.

7. Système de microscopie (10) selon les revendications 5 et 6, dans lequel l'élément de commutation est formé par le premier élément de déviation (66) qui sert à commuter entre le premier état de fonctionnement et le deuxième état de fonctionnement entre une position d'inclinaison, qui est située dans la première plage d'angles d'inclinaison et qui réalise le premier état de fonctionnement, et une position d'inclinaison qui est située dans la deuxième plage d'angles d'inclinaison et qui réalise le deuxième état de fonctionnement.

8. Système de microscopie (10) selon la revendication 6, dans lequel un élément de déviation de lumière (78), qui peut être inséré dans le trajet de faisceau et qui est séparé du premier élément de déviation (66), est disposé en tant qu'élément de commutation, le système de microscopie (10) se trouvant dans le premier état de fonctionnement lorsque l'élément de déviation de lumière (78) est retiré du trajet de faisceau et l'élément de déviation de lumière (78) commutant efficacement l'unité fonctionnelle de microscopie à balayage (14) et réglant ainsi le deuxième état de fonctionnement lorsqu'il est inséré dans le trajet de faisceau.

9. Système de microscopie (10) selon l'une des revendications précédentes, dans lequel l'unité fonctionnelle de microscopie à balayage (14) comporte un module d'excitation/de détection (72) qui est séparé spatialement de l'unité fonctionnelle de microscopie à nappe de lumière (12) et qui est commuté efficacement dans le deuxième état de fonctionnement.

10. Système de microscopie selon l'une des revendications précédentes, dans lequel l'unité fonctionnelle de microscopie à nappe de lumière (12) comprend :
une optique d'éclairage (18) qui est conçue pour générer la distribution de lumière d'éclairage en forme de nappe de lumière dans un espace d'image intermédiaire (24),
une optique de transport (20) qui est conçue pour être télécentrique des deux côtés et qui est conçue pour reproduire la distribution de lumière d'éclairage en forme de nappe de lumière, générée dans l'espace d'image intermédiaire (24), dans l'échantillon (16) et une région de l'échantillon (16), qui est éclairée avec la distribution de lumière d'éclairage en forme de nappe de lumière, en tant qu'image intermédiaire dans l'espace d'image intermédiaire (24), et
une optique de détection (22) qui est conçue pour reproduire l'image intermédiaire, générée dans l'espace d'image intermédiaire (24), sur un détecteur (34),
les axes optiques (O₁, O₂, O₃) de l'optique d'éclairage (18), de l'optique de transport (20) et de l'optique de détection (22) se croisant dans l'espace d'image intermédiaire (24), et
le premier élément de balayage (66) étant disposé dans l'optique de transport (20) et étant conçu pour déplacer la distribution de lumière d'éclairage en forme de nappe de lumière dans l'échantillon (16) transversalement à l'axe optique (O₂) de l'optique de transport (20) dans le premier état de fonctionnement.

11. Système de microscopie (10) selon la revendication 10, dans lequel l'optique de transport (20) est dépourvue de séparateur de faisceau.

12. Système de microscopie (10) selon l'une des revendications précédentes, dans lequel l'unité fonctionnelle de microscopie à balayage (14) forme un microscope confocal ou un microscope multiphotonique.

13. Procédé de reproduction d'un échantillon (16) à l'aide d'un système de microscopie (10), le procédé comprenant les étapes suivantes :
- régler un premier état de fonctionnement du système de microscopie (10) dans lequel un échantillon (16) est éclairé et reproduit au moyen d'une unité fonctionnelle de microscopie à nappe de lumière (12) avec une distribution de lumière d'éclairage en forme de nappe de lumière,
- régler un deuxième état de fonctionnement du système de microscopie (10) dans lequel un échantillon (16) est éclairé et reproduit au moyen d'une unité fonctionnelle de microscopie à balayage (14) avec une distribution de lumière d'éclairage ponctuelle,
- l'échantillon (16) étant balayé suivant un axe unique dans le premier état de fonctionnement avec la distribution de lumière d'éclairage en forme de nappe de lumière générée par l'unité fonctionnelle de microscopie à nappe de lumière (12) au moyen d'un premier élément de balayage (66), et
- l'échantillon (16) étant balayé à la fois suivant un axe unique dans le deuxième état de fonctionnement avec la distribution de lumière d'éclairage ponctuelle générée par l'unité fonctionnelle de microscopie à balayage (14) au moyen du premier élément de balayage (66) et suivant un autre axe unique au moyen d'un autre deuxième élément de balayage (76) de façon à générer un balayage suivant deux axes de l'échantillon (16) à l'aide des deux éléments de balayage (66, 76),
- dans lequel l'unité fonctionnelle de microscopie à nappe de lumière (12) et l'unité fonctionnelle de microscopie à balayage (14) comportent un objectif commun (50) qui est dirigé vers l'échantillon (16), qui sert à la fois à l'éclairage et à la détection, et
- dans lequel l'unité fonctionnelle de microscopie à nappe de lumière (12) et l'unité fonctionnelle de microscopie à balayage (14) comportent un objectif de lunette commun (56) qui reproduit une pupille de sortie (70) de l'objectif commun (50) sur le premier élément de balayage (66) .
